# EUROPEAN PATENT APPLICATION

(11) **EP 4 683 157 A1**
(43) Date of publication of application: **21.01.2026**
(21) Application number: 24770752.4
(22) Date of filing: 08.03.2024
(51) Int. Cl.: H02J 7/00

(54) **DISPLAY DEVICE, STORAGE SYSTEM, DISPLAY METHOD, PROGRAM, AND STORAGE DEVICE**

(30) Priority: 14.03.2023 JP 2023039310
(71) Applicant: HONDA MOTOR CO., LTD., Tokyo 105-8404 (JP)
(72) Inventor: FUNADA Noritaka, Wako-shi, Saitama 351-0193 (JP); YOSHIDA Nobuyoshi, Wako-shi, Saitama 351-0193 (JP); TAKAGI Tomokazu, Wako-shi, Saitama 351-0193 (JP)
(74) Representative: Weickmann & Weickmann PartmbB
(86) International application number: PCT/JP2024/008987
(87) International publication number: WO 2024/190646

(57) **Abstract**

This display device includes: a plurality of light emission portions that are aligned in a row; and a control portion that controls light emission of the plurality of light emission portions. The control portion is capable of performing a first control that performs a control based on a number of light emission portions which are lighted among the plurality of light emission portions, the number being determined in accordance with a storage amount of a storage target stored in a storage portion, a second control that performs a control based on a combination of a number of light emission portions which are blinked among the plurality of light emission portions and a blinking position, the combination being determined in accordance with a portion of an abnormality that occurs in a main device having the storage portion, and a third control that performs a control based on a blinking mode of the plurality of light emission portions, the blinking mode being determined in accordance with a mode of the abnormality that occurs in the main device.

## Description

### TECHNICAL FIELD

The present invention relates to a display device, a storage system, a display method, a program, and a storage device.

Priority is claimed on Japanese Patent Application No. 2023-039310, filed on March 14, 2023, the contents of which are incorporated herein by reference.

### BACKGROUND

For example, Patent Document 1 discloses a display device that displays an abnormal content by using a plurality of light sources (a rod-shaped light source and an annular light source) that are aligned in a predetermined direction. In Patent Document 1, the abnormal content is distinguished by the lighting position or the blinking speed of each light source.

### [Related Art Documents]

### [Patent Documents]

[Patent Document 1]
Japanese Unexamined Patent Application, First Publication No. 2020-198664

### SUMMARY OF INVENTION

### PROBLEMS TO BE SOLVED BY THE INVENTION

However, even if the abnormal content is distinguished by the lighting position or the blinking speed of each light source, only several kinds of abnormal contents can be displayed. Therefore, it is difficult to identify an abnormality target (abnormality portion).

In order to solve the problem described above, the present application aims at providing a display device, a storage system, a display method, a program, and a memory device that can easily identify an abnormality target (abnormality portion).

### MEANS FOR SOLVING THE PROBLEM

As a means for solving the problem described above, an aspect of the present invention has the following configuration.
(1) A display device (for example, a display device 1 in an embodiment) according to an aspect of the present invention is a display device including: a plurality of light emission portions (for example, light emission portions 51, 52, 53 in the embodiment) that are aligned in a row; and a control portion (for example, a control portion 82 in the embodiment) that controls light emission of the plurality of light emission portions, wherein the control portion is capable of performing a first control that performs a control based on a number of light emission portions which are lighted among the plurality of light emission portions, the number being determined in accordance with a storage amount of a storage target stored in a storage portion (for example, a storage portion 311 in the embodiment), a second control that performs a control based on a combination of a number of light emission portions which are blinked among the plurality of light emission portions and a blinking position, the combination being determined in accordance with a portion of an abnormality that occurs in a main device (for example, a display device 1 or a storage device 10 in the embodiment) having the storage portion, and a third control that performs a control based on a blinking mode of the plurality of light emission portions, the blinking mode being determined in accordance with a mode of the abnormality that occurs in the main device.
(2) In the display device described in above (1), the plurality of light emission portions used in the second control and the plurality of light emission portions used in the third control may be the same as each other.
(3) In the display device described in above (1) or (2), the storage portion may be an energy storage portion that stores energy or an energy source.
(4) In the display device described in above (3), the energy storage portion may be an electric power storage portion that stores electric power.
(5) A storage system (for example, a storage system 300 in the embodiment) according to an aspect of the present invention includes: a storage device (for example, the storage device 10 in the embodiment) having the storage portion; and the display device described in any of above (1) to (4).
(6) A display method according to an aspect of the present invention is a display method of a display device including: a plurality of light emission portions that are aligned in a row; and a control portion that controls light emission of the plurality of light emission portions, wherein the display method includes: a first step of performing a control based on a number of light emission portions which are lighted among the plurality of light emission portions, the number being determined in accordance with a storage amount of a storage target stored in a storage portion; a second step of performing a control based on a combination of a number of light emission portions which are blinked among the plurality of light emission portions and a blinking position, the combination being determined in accordance with a portion of an abnormality that occurs in a main device having the storage portion; and a third step of performing a control based on a blinking mode of the plurality of light emission portions, the blinking mode being determined in accordance with a mode of the abnormality that occurs in the main device.
(7) A program according to an aspect of the present invention causes a computer including: a plurality of light emission portions that are aligned in a row; and a control portion that controls light emission of the plurality of light emission portions to execute: a first step in which the control portion performs a control based on a number of light emission portions which are lighted among the plurality of light emission portions, the number being determined in accordance with a storage amount of a storage target stored in a storage portion; a second step in which the control portion performs a control based on a combination of a number of light emission portions which are blinked among the plurality of light emission portions and a blinking position, the combination being determined in accordance with a portion of an abnormality that occurs in a main device having the storage portion; and a third step in which the control portion performs a control based on a blinking mode of the plurality of light emission portions, the blinking mode being determined in accordance with a mode of the abnormality that occurs in the main device.
(8) A storage device (for example, a memory section 86 in the embodiment) according to an aspect of the present invention stores the program described in above (7).

### ADVANTAGE OF THE INVENTION

According to the display device described in above (1) of the present invention, the control based on the number of light emission portions which are lighted among the plurality of light emission portions, the number being determined in accordance with the storage amount of the storage target stored in the storage portion, is performed in the first control, the control based on the combination of the number of light emission portions which are blinked among the plurality of light emission portions and the blinking position, the combination being determined in accordance with the portion of the abnormality that occurs in the main device having the storage portion is performed in the second control, the control based on the blinking mode of the plurality of light emission portions, the blinking mode being determined in accordance with the mode of the abnormality that occurs in the main device is performed in the third control, and thereby, it is possible to easily identify an abnormality target (abnormality portion).

According to the display device described in above (2) of the present invention, it is possible to decrease the number of the light emission portions as compared with the case where the plurality of light emission portions used in the second control and the plurality of light emission portions used in the third control are different from each other. Accordingly, it is possible to easily identify an abnormality target (abnormality portion) by a small number of light emission portions.

According to the display device described in above (3) of the present invention, in the configuration in which the storage portion is an energy storage portion that stores energy or an energy source, it is possible to easily identify an abnormality target (abnormality portion).

According to the display device described in above (4) of the present invention, in the configuration in which the energy storage portion is an electric power storage portion that stores electric power, it is possible to easily identify an abnormality target (abnormality portion).

According to the storage system described in above (5) of the present invention, by including the display device described above, it is possible to easily identify an abnormality target (abnormality portion).

According to the display method described in above (6) of the present invention, a control based on a number of light emission portions which are lighted among a plurality of light emission portions, the number being determined in accordance with a storage amount of a storage target stored in a storage portion, is performed in a first step, a control based on a combination of a number of light emission portions which are blinked among the plurality of light emission portions and a blinking position, the combination being determined in accordance with a portion of an abnormality that occurs in a main device having the storage portion is performed in a second step, a control based on a blinking mode of the plurality of light emission portions, the blinking mode being determined in accordance with a mode of the abnormality that occurs in the main device is performed in a third step, and thereby, it is possible to easily identify an abnormality target (abnormality portion).

According to the program described in above (7) of the present invention, by causing a computer to execute: a first step in which a control portion performs a control based on a number of light emission portions which are lighted among a plurality of light emission portions, the number being determined in accordance with a storage amount of a storage target stored in a storage portion; a second step in which the control portion performs a control based on a combination of a number of light emission portions which are blinked among the plurality of light emission portions and a blinking position, the combination being determined in accordance with a portion of an abnormality that occurs in a main device having the storage portion; and a third step in which the control portion performs a control based on a blinking mode of the plurality of light emission portions, the blinking mode being determined in accordance with a mode of the abnormality that occurs in the main device, it is possible to easily identify an abnormality target (abnormality portion).

According to the memory device described in above (8) of the present invention, by storing the program described above, it is possible to easily identify an abnormality target (abnormality portion).

### BRIEF DESCRIPTION OF THE DRAWINGS

FIG. 1 is a front view of a storage system according to an embodiment.
FIG. 2 is a perspective view of a display device according to the embodiment.
FIG. 3 is a block diagram of the storage system according to the embodiment.
FIG. 4 is an explanatory view of a display portion according to the embodiment.
FIG. 5 is a flowchart showing an example of a control procedure according to the embodiment.
FIG. 6 is a view showing an example of a failure type according to the embodiment.
FIG. 7 is a view showing an example of a failure detail according to the embodiment.
FIG. 8 is a view showing an example of outline information and detail information according to the embodiment.
FIG. 9 is a state transition view showing an example of failure occurrence according to the embodiment.
FIG. 10 is a view showing an example of a set value of a failure display according to the embodiment.
FIG. 11 is a view showing a display of a display portion according to Comparative Example 1.
FIG. 12 is a view showing a display of a display portion according to Comparative Example 2.
FIG. 13 is a view showing a display of a display portion according to Comparative Example 3.

### DESCRIPTION OF THE EMBODIMENTS

Hereinafter, embodiments of the present invention will be described with reference to the drawings. In the following description, for example, an expression representing a relative or absolute arrangement such as "parallel", "orthogonal", "center", or "coaxial" not only strictly means such an arrangement but also includes a state of relative displacement with a tolerance or with an angle or a distance sufficient to obtain the same function. In the drawings used for the following description, the scale size of each member is appropriately changed such that each member is in a recognizable size.

### <Storage system>

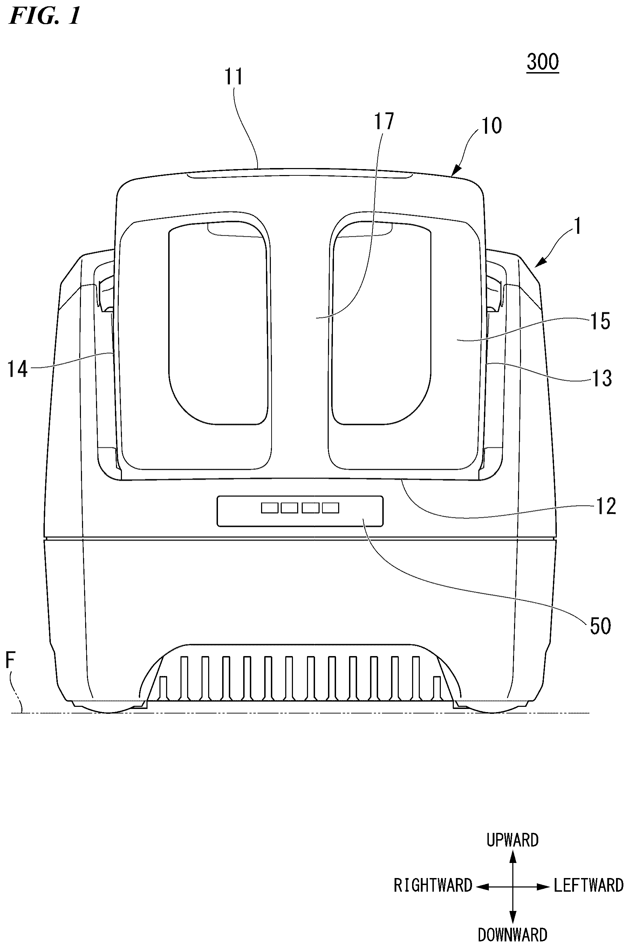

With reference to FIG. 1 to FIG. 3, a storage system 300 includes a storage device 10 and a display device 1. In the following description, three axis directions orthogonal to each other as shown in the drawings are defined as a forward-rearward direction, a leftward-rightward direction, and an upward-downward direction. The upward-downward direction is also referred to as a vertical direction. A downward direction in the upward-downward direction corresponds to a gravity direction.

### <Storage device>

The storage device 10 is constituted as a unit using a single battery pack. For example, the storage device 10 is a MPP (Mobile Power Pack). For example, the storage device 10 is a storage battery (secondary battery) such as a battery. For example, the storage device 10 is a lithium ion battery. For example, the storage device 10 can be used as an electric power source for a travel motor mounted on a two-wheeled or four-wheeled electric vehicle. The application of the storage device 10 is not limited to that described above, and the storage device 10 can be used for various purposes. For example, the storage device 10 may be applied to an electric device other than electric vehicles.

The storage device 10 has a substantially rectangular parallelepiped shape as a whole. In the following description, by using an accommodation state of the storage device 10 in the display device 1 (when the display device functions as a holding device) as a reference, surfaces of the storage device 10 are defined as an upper surface 11, a lower surface 12, a left surface 13, a right surface 14, a front surface 15, and a rear surface (not shown).

The storage device 10 is accommodated in an accommodation space 21 via an opening portion 20. In the accommodation state of the storage device 10, the upper surface 11 and the front surface 15 of the storage device 10 are exposed from the display device 1. A handle 17 is provided on the front surface 15 of the storage device 10. For example, a user can carry the storage device 10 in a hanging state in which the rear surface faces downward by holding the handle 17. The storage device 10 can independently stand in a state where the rear surface is in contact with a ground surface or a floor surface.

A first terminal (not shown) is provided on an upper portion of the rear surface of the storage device 10. For example, the first terminal includes a plurality of metal terminals that have a substantially flat plate shape and are arranged to be spaced apart from each other in a leftward-rightward direction. For example, the first terminal is a receptacle (female connector) that has a recess shape and extends in the leftward-rightward direction.

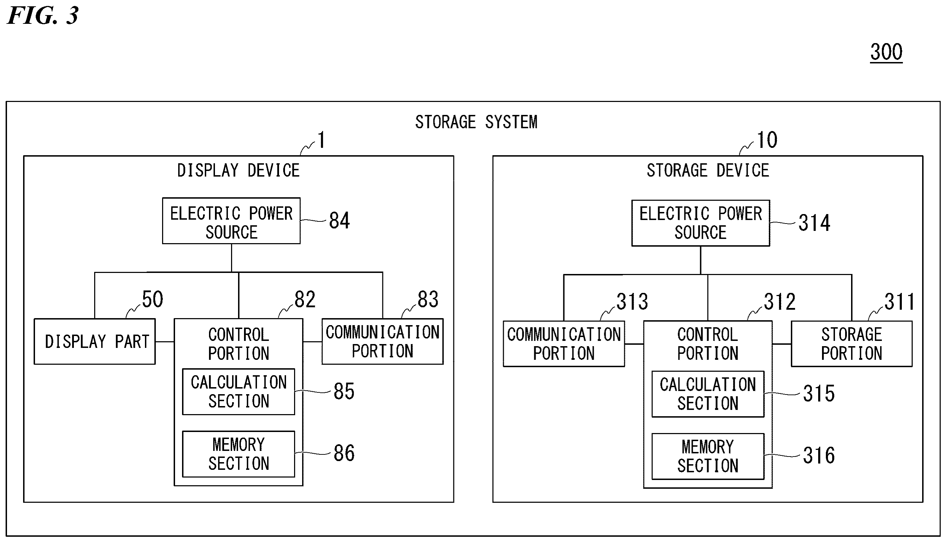

With reference also to FIG. 3, the storage device 10 includes a storage portion 311, a control portion 312, a communication portion 313, and an electric power source 314.

The storage portion 311 can store a storage target. The storage portion 311 is an energy storage portion that stores energy. The energy storage portion is an electric power storage portion that stores electric power. For example, the electric power storage portion includes a plurality of battery cells that are connected in series or in parallel. The battery cell repeatedly performs charging and discharging.

The control portion 312 determines a storage amount of the storage target stored in the storage portion 311 based on information or the like acquired by a sensor (not shown) or the like provided on the storage device 10 and the storage portion 311. The control portion 312 is responsible for the entire control of the storage device 10.

The control portion 312 includes a calculation section 315 and a memory section 316.

For example, the calculation section 315 is constituted of a processor such as a CPU (Central Processing Unit).

For example, the memory section 316 includes a ROM (Read Only Memory) that stores a program, a RAM (Random Access Memory) that temporarily stores data, a flash memory, and the like.

The control portion 312 transmits information (specifically, information indicating a battery residual amount) indicating the storage amount of the storage target stored in the storage portion 311 to the display device 1 via the communication portion 313. The control portion 312 transmits information indicating an abnormality of the storage device 10 or the storage portion 311 to the display device 1 via the communication portion 313.

The communication portion 313 can perform a communication with a communication portion 83 of the display device 1. For example, the communication portion 313 can perform a wired communication with the communication portion 83 of the display device 1. The communication is not limited to the wired communication, and a wireless communication between the communication portion 313 of the storage device 10 and the communication portion 83 of the display device 1 may be performed.

The electric power source 314 supplies electric power to each of configuration elements of the storage device 10. For example, the electric power source 314 can convert commercial AC electric power into DC electric power. For example, the electric power source 314 can supply converted DC electric power to each of the configuration elements of the storage device 10.

### <Display device>

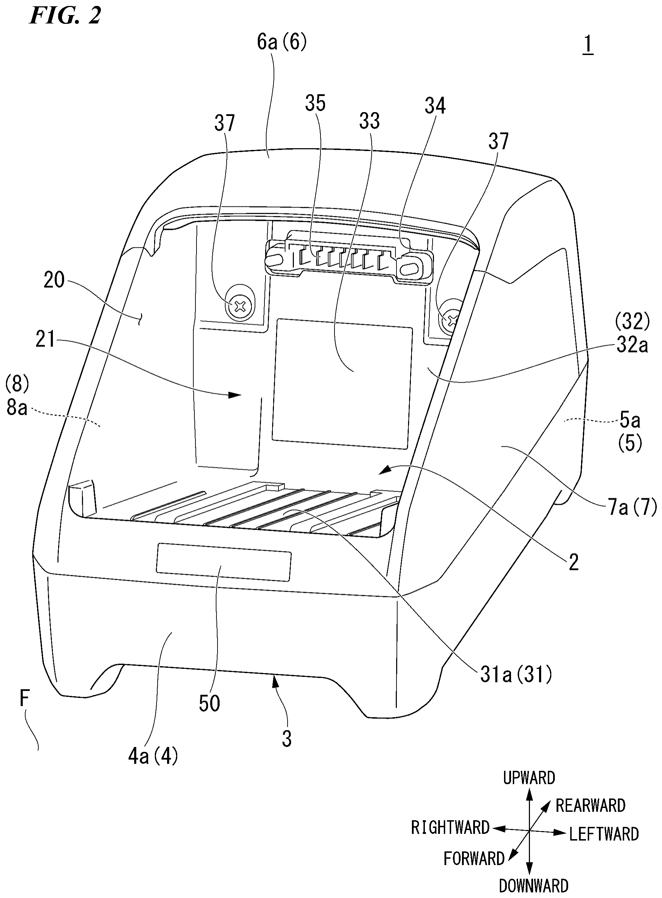

With reference also to FIG. 2, the display device 1 also functions as a holding device that attachably and detachably holds the storage device 10. The term "attachable and detachable" means that attachment and detachment are possible. In the embodiment, the attachable and detachable form is an attachable and detachable form that does not require a separate tool or the like for attachment and detachment.

The display device 1 includes: a holding portion 2 that attachably and detachably holds the storage device 10; a bottom portion 3 that faces a placement surface F when the display device 1 is placed; a front portion 4 having a front surface 4a that faces a forward direction of the display device 1; a rear portion 5 having a rear surface 5a that faces a rearward direction of the display device 1; an upper portion 6 having an upper surface 6a that faces an upward direction of the display device 1; a left portion 7 having a left surface 7a that faces a leftward direction of the display device 1; and a right portion 8 having a right surface 8a that faces a rightward direction of the display device 1. In the embodiment, the placement surface F on which the display device 1 is placed is a flat ground surface or a floor surface (horizontal surface).

The opening portion 20 is formed on the display device 1 from the front portion 4 to the upper portion 6. The accommodation space 21 having a shape along an outer shape of the storage device 10 is formed at an inside of the display device 1 via the opening portion 20. The accommodation space 21 is provided to be recessed from the upper portion 6 of the display device 1. The accommodation space 21 is formed of a plurality of surfaces (specifically, a bottom surface (an upper surface 31a of a first section 31) and three side surfaces (inner surfaces of the left and right side portions 7, 8 and a front surface 32a of a second section 32) that stand from left and right edge portions and a rear end portion of the bottom surface. At least one of the three side surfaces may not be a flat surface.

The holding portion 2 has the first section 31 that holds the lower surface 12 (an example of a first surface that faces a first direction of the storage device 10) of the storage device 10 and the second section 32 that holds a rear surface (an example of a second surface that faces a second direction intersecting the first direction of the storage device 10) of the storage device 10. The holding portion 2 has a substantially L shape in a cross section as a whole.

The holding portion 2 is provided so as to attach and detach the storage device 10 in a direction along the first section 31. The lower surface 12 of the storage device 10 comes into contact with the upper surface 31a of the first section 31 when the storage device 10 is accommodated. The rear surface of the storage device 10 comes into contact with the front surface 32a of the second section 32 when the storage device 10 is accommodated. The upper surface 31a of the first section 31 is constituted to be smooth so that the lower surface 12 of the storage device 10 can slide smoothly along the upper surface 31a.

A region 33 to which a label can be attached is provided on the front surface 32a of the second section 32. A penetration hole 34 that penetrates through the second section 32 in the forward-rearward direction is formed on an upper portion of the second section 32. The penetration hole 34 extends in the leftward-rightward direction corresponding to a position of the first terminal (not shown) of the storage device 10. A second terminal 35 that is attachable to and detachable from the first terminal provided on the storage device 10 is provided on an upper rear surface of the second section 32.

For example, the second terminal 35 is attached to the second section 32 by a fastening member such as a bolt 37 via a bracket (not shown). For example, first, a bracket to which the second terminal 35 is fixed is arranged on a rear surface of the second section 32. Next, the bolt 37 is fastened to a female screw portion (not shown) of the bracket from the outside (a forward side of the second section 32) of the display device 1. Thereby, the second terminal 35 can be fixed to the second section 32 via the bracket.

For example, the second terminal 35 includes a plurality of metal terminals that have a substantially flat plate shape and are arranged to be spaced apart from each other in the leftward-rightward direction. For example, the second terminal 35 is a plug (male connector) that extends in the leftward-rightward direction. The second terminal 35 protrudes forward (specifically, forward and upward) from the penetration hole 34. A portion that protrudes forward from the penetration hole 34 in the second terminal 35 is always exposed.

For example, the user pushes the storage device 10 accommodated in the accommodation space 21 to a rearward side along the upper surface of the first section 31. Then, the plug (second terminal 35) of the display device 1 is fitted to the first terminal (receptacle) of the storage device 10. Thereby, it is possible to connect the first terminal to the second terminal 35.

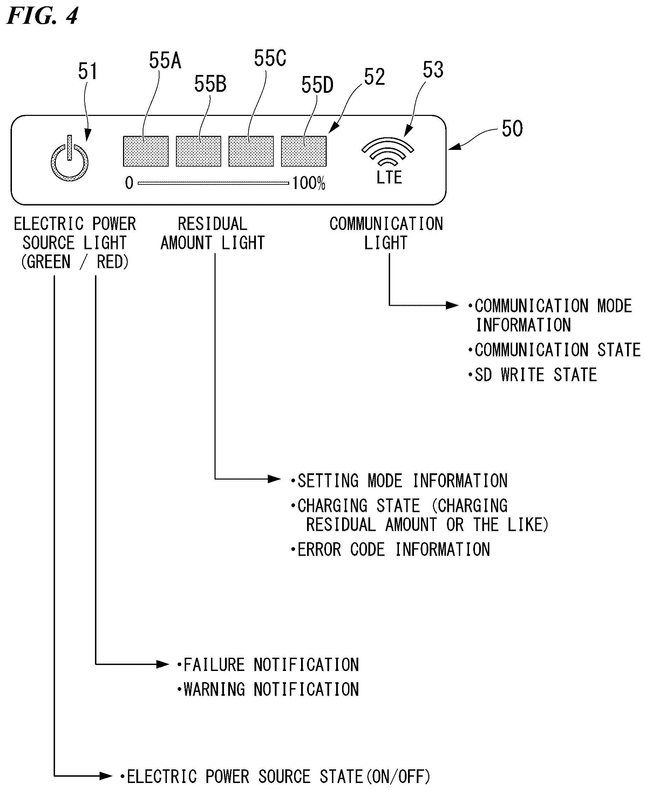

The front portion 4 is arranged at a lower position than the holding portion 2 when seen from a forward direction of the display device 1. The front portion 4 has the front surface 4a that faces the forward direction of the display device 1. A display part 50 (refer to FIG. 4) such as an indicator is provided on the front surface 4a of the front portion 4.

With reference also to FIG. 3, the display device 1 includes the display part 50, a control portion 82, the communication portion 83, and an electric power source 84.

The display part 50 can display the storage amount of the storage target stored in the storage portion 311, the abnormality of the storage device 10 or the storage portion 311, and the like. The control portion 82 is responsible for the entire control of the display device 1.

Although not shown, the display device 1 includes an electric power conversion device that is provided to be capable of transmitting electric power to the storage device 10 held by the holding portion 2. For example, the electric power conversion device (not shown) is an AC/DC inverter. For example, the electric power conversion device converts AC electric power supplied from an electric power source (for example, grid power) into DC electric power and supplies the DC electric power to the storage device 10.

For example, the control portion 82 controls the electric power conversion device. For example, an AC electric power source at the outside of the display device 1 is connected to the electric power conversion device. In this state, when the first terminal of the storage device 10 and the second terminal 35 of the display device 1 are connected, electric power is supplied to the storage device 10 via the electric power conversion device. Thereby, the storage device 10 is charged. A configuration can be employed in which when the first terminal of the storage device 10 and the second terminal 35 of the display device 1 are connected, the electric power of the storage device 10 is supplied to the display device 1 side.

Although not shown, an electric terminal (receptacle) to which a plug of an electric device such as an AC electric power outlet is connected may be provided on the upper portion 6 of the display device 1. For example, an inverter of DC/AC conversion that converts the DC electric power supplied from the storage device 10 into AC electric power and supplies the AC electric power to the electric device connected to the outlet may be provided at an inner portion of the display device 1. In this case, the display device 1 has a function as an electric power supply device in addition to a function as a charging device.

The control portion 82 includes a calculation section 85 and a memory section 86 (corresponding to a computer-readable storage device).

For example, the calculation section 85 is constituted of a processor such as a CPU (Central Processing Unit).

For example, the memory section 86 includes a ROM (Read Only Memory) that stores a program, a RAM (Random Access Memory) that temporarily stores data, a flash memory, and the like.

The control portion 82 performs a display using the display part 50 based on information (specifically, information indicating the storage amount stored in the storage portion 311, information indicating an abnormality of the storage device 10 or the storage portion 311, and the like) transmitted from the storage device 10 via the communication portion 83.

The communication portion 83 can perform a communication with the communication portion 313 of the storage device 10. For example, the communication portion 83 can perform a wired communication with the communication portion 313 of the storage device 10. The communication is not limited to the wired communication, and a wireless communication may be performed between the communication portion 83 of the display device 1 and the communication portion 313 of the storage device 10.

The electric power source 84 supplies electric power to each of the configuration elements of the display device 1. For example, the electric power source 84 can convert commercial AC electric power into DC electric power. For example, the electric power source 84 can supply the converted DC electric power to each of the configuration elements of the display device 1.

### <Display portion>

With reference also to FIG. 4, the display part 50 includes a plurality of light emission portions 51, 52, 53 that are aligned in a row. The display part 50 has a longitudinal side in the leftward-rightward direction. The plurality of light emission portions 51, 52, 53 are aligned along a longitudinal direction of the display part 50. For example, the light emission portions 51, 52, 53 are constituted of a LED (Light Emitting Diode).

For example, the light emission portions 51, 52, 53 may be in a form in which light is guided from an LED arranged at a far position by a light guide body to the light emission portions 51, 52, 53 in addition to a form in which an LED (light source) is provided immediately behind the light emission portions 51, 52, 53. The configuration form of the light emission portions 51, 52, 53 is not limited to the form described above and can be changed in accordance with a design specification.

The plurality of light emission portions 51, 52, 53 include an electric power source light 51, a residual amount light 52, and a communication light 53. The electric power source light 51, the residual amount light 52, and the communication light 53 are aligned in this order on the display part 50 from one side (left side in the drawing) toward another side (right side in the drawing) in the leftward-rightward direction. The plurality of light emission portions 51, 52, 53 may not include the communication light 53. For example, the installation mode of the communication light 53 can be changed in accordance with a design specification.

The electric power source light 51 is arranged on one end side (left end side in the drawing) of the display part 50. For example, the electric power source light 51 emits light of a green color when an electric power source state is an ON state. For example, the electric power source light 51 is turned off when the electric power source state is an OFF state. For example, the electric power source light 51 emits light of a red color when an abnormality or the like occurs. For example, when the electric power source light 51 emits light of a red color, a failure notification or a warning notification may be performed. The mode in which the electric power source light 51 emits light is not limited to the mode described above and can be changed in accordance with a design specification.

The residual amount light 52 is arranged between the electric power source light 51 and the communication light 53 in the leftward-rightward direction. For example, the residual amount light 52 emits light depending on a residual amount of the battery. For example, the residual amount light 52 causes an user to recognize setting mode information, a charging state (for example, a charging residual amount or the like), error code information, and the like by a light emission form. For example, the residual amount light 52 emits light of a green color. The mode in which the residual amount light 52 emits light is not limited to the mode described above and can be changed in accordance with a design specification.

The residual amount light 52 includes a plurality of segments 55A, 55B, 55C, and 55D. The plurality of segments 55A, 55B, 55C, and 55D are aligned along a longitudinal direction of the display part 50. In an example of the drawing, four segments 55A, 55B, 55C, and 55D are provided.

Hereinafter, among the four segments 55A, 55B, 55C, and 55D, a first segment 55A from the left side in the drawing is also referred to as a "first segment 55A", a second segment 55B is also referred to as a "second segment 55B", a third segment 55C is also referred to as a "third segment 55C", and a fourth segment 55D is also referred to as a "fourth segment 55D". The number of the segments 55A, 55B, 55C, and 55D is not limited to the number described above and can be changed in accordance with a design specification.

In an example of the drawing, the segments 55A, 55B, 55C, and 55D have a rectangular shape having a longitudinal side in the leftward-rightward direction; however, the embodiment is not limited to that described above. For example, the segments 55A, 55B, 55C, and 55D may have a rectangular shape having a longitudinal side in the upward-downward direction. For example, the segments 55A, 55B, 55C, and 55D may have a square shape. For example, the segments 55A, 55B, 55C, 55D may have a circular shape or an elliptical shape. For example, the shape of the segments 55A, 55B, 55C, and 55D is not limited to those described above and can be changed in accordance with a design specification.

The communication light 53 is arranged on another end side (right end side in the drawing) of the display part 50. For example, the communication light 53 emits light in response to an LTE (Long Term Evolution) communication which is an example of a communication standard. For example, the communication light 53 causes the user to recognize communication mode information, a communication state, a SD write state, and the like by a light emission mode. The SD write state means a write state of a SD (Secure Digital) memory card which is an example of a standard of a flash memory card.

### <Control portion>

The control portion 82 controls light emission of the plurality of light emission portions 51, 52, 53. The control portion 82 is capable of performing a first control that performs a control based on the number of light emission portions which are lighted among the plurality of light emission portions 51, 52, 53, the number being determined in accordance with a storage amount of a storage target stored in the storage portion 311, a second control that performs a control based on the combination of the number of light emission portions which are blinked among the plurality of light emission portions 51, 52, 53 and a blinking position, the combination being determined in accordance with a portion of an abnormality that occurs in a main device having the storage portion 311, and a third control that performs a control based on a blinking mode of the plurality of light emission portions 51, 52, 53, the blinking mode being determined in accordance with the mode of the abnormality that occurs in the main device.

For example, examples of the main device include the display device 1 on which the plurality of light emission portions 51, 52, 53 are provided, the storage device 10 held by the display device 1, and the like. For example, the main device may be a charging device, an electric power supply device, a vehicle, or the like. The form of the main device is not limited to those described above and can be changed in accordance with a design specification.

For example, examples of the abnormality that occurs in the main device include an abnormality such as a failure. The abnormality includes a mode in which there is a possibility of a failure in addition to the abnormality such as a failure. Examples of a portion of the abnormality include a component in which an abnormality such as a failure occurs. Examples of a mode of the abnormality include the type of a failure. Examples of the blinking mode include the number of times of blinking, a blinking frequency, a wavelength of light, a frequency, and the like.

In the following description, as an abnormality (abnormal content) that occurs in the main device, a charging board abnormality, a battery abnormality, and a communication board abnormality are shown as an example. The charging board abnormality means an abnormality of a charging board provided on the display device 1. For example, the charging board abnormality is a failure of the charging board or the like. The battery abnormality means an abnormality of a battery cell provided on the storage device 10. For example, the battery abnormality is a failure of the battery cell or the like. The communication board abnormality means an abnormality of a communication board that is provided when the communication standard described above is employed. For example, the communication board abnormality is a failure of the communication board or the like.

### <First control>

In the first control, the control portion 82 lights the electric power source light 51 and the residual amount light 52 among the plurality of light emission portions 51, 52, 53. The "lighting" in the first control means lighting among two states which are lighting and non-lighting, and includes blinking which is intermittent lighting. For example, in the first control, the control portion 82 lights the electric power source light 51 in a green color, and lights or blinks at least a part of the residual amount light 52 in a green color.

For example, in the first control, the control portion 82 causes a lighting/blinking action to be different between the duration of charging stopping (before a charging start) and the duration of charging. For example, during charging stopping, the control portion 82 lights all of the target segments proportional to a battery residual amount. For example, during charging, the control portion 82 blinks only one segment at the maximum (in the embodiment, one segment at the right end) among the target segments proportional to the battery residual amount.

For example, when the battery residual amount (an example of the storage amount of the storage target stored in the storage portion 311) is 0% or more and less than 25%, the control portion 82 blinks the first segment 55A in a green color and turns off the light of the other segments 55B, 55C, 55D.

For example, when the battery residual amount is 25% or more and less than 50%, the control portion 82 lights the first segment 55A in a green color, blinks the second segment 55B in a green color, and turns off the light of the other segments 55C, 55D.

For example, when the battery residual amount is 50% or more and less than 75%, the control portion 82 lights the first to second segments 55A, 55B in a green color, blinks the third segment 55C in a green color, and turns off the light of the other segment 55D.

For example, when the battery residual amount is 75% or more, the control portion 82 lights the first to third segments 55A, 55B, 55C in a green color and blinks the fourth segment 55D in a green color.

### <Second control>

In the second control, the control portion 82 lights the electric power source light 51 and blinks the residual amount light 52 among the plurality of light emission portions 51, 52, 53. For example, in the second control, the control portion 82 lights the electric power source light 51 in a red color and blinks at least part of the residual amount light 52 in a green color.

For example, when the abnormal content is the charging board abnormality (when a portion of an abnormality that occurs in the main device is the charging board), the control portion 82 turns off the light of the first and second segments 55A, 55B and blinks two positions which are third and fourth segments 55C, 55D in a green color.

For example, when the abnormal content is the battery abnormality (when the portion of the abnormality that occurs in the main device is the battery), the control portion 82 blinks all of the first to fourth segments 55A, 55B, 55C, 55D in a green color.

For example, when the abnormal content is the communication board abnormality (when the portion of the abnormality that occurs in the main device is the communication board), the control portion 82 turns off the first, third, and fourth segments 55A, 55C, 55D and blinks one position which is the second segment 55B in a green color.

### <Third control>

In the third control, among the plurality of light emission portions 51, 52, 53, the electric power source light 51 is lighted, and the residual amount light 52 is blinked. For example, in the third control, the control portion 82 lights the electric power source light 51 in a red color and blinks at least part of the residual amount light 52 in a green color. The plurality of light emission portions 51, 52 used in the second control and the plurality of light emission portions 51, 52 used in the third control are the same as each other.

For example, when the abnormal content is a predetermined failure, the control portion 82 performs predetermined blinking in a green color in a predetermined segment used in the second control as a predetermined error code.

### <Control procedure>

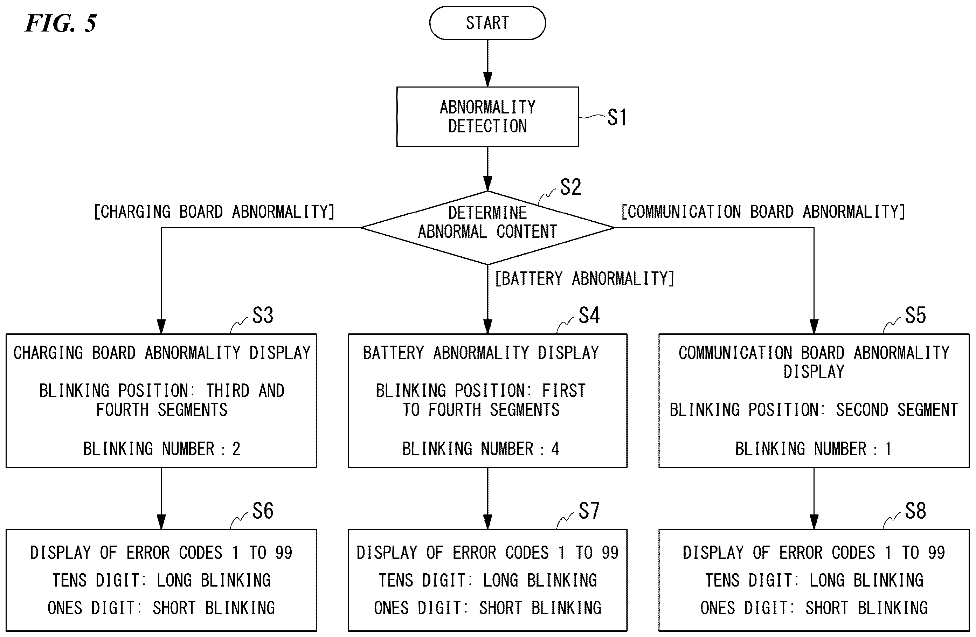

FIG. 5 is a flowchart showing an example of a control procedure according to the embodiment.

Hereinafter, as an example of a control procedure, a case where display by the display device 1 is started when the first terminal of the storage device 10 and the second terminal 35 of the display device 1 are connected to each other is described.

In Step S1, the control portion 82 performs abnormality detection. After Step S1, the routine proceeds to Step S2.

In Step S2, the control portion 82 determines the abnormal content. For example, the control portion 82 determines that a charging board abnormality, a battery abnormality, or a communication board abnormality occurs when a predetermined condition described below is satisfied.

For example, the charging board abnormality corresponds to the case where a current sensor does not operate although a current command is output from the control portion 82. When the current sensor does not operate, the control portion 82 determines that the abnormal content is the charging board abnormality.

For example, the battery abnormality is detected by the storage device 10 itself. When the battery abnormality is detected, the storage device 10 transmits information indicating that the abnormal content is the battery abnormality to the control portion 82 via the communication portion 313. When receiving the information described above, the control portion 82 determines that the abnormal content is the battery abnormality.

For example, the communication board abnormality corresponds to the case (for example, the case where a communication at regular intervals does not come) where a communication command does not come from the communication board to the control portion 82 for a predetermined time or more. When the communication command described above does not come, the control portion 82 determines that the abnormal content is the communication board abnormality.

When the abnormal content is the charging board abnormality, the control portion 82 proceeds to Step S3. When the abnormal content is the battery abnormality, the control portion 82 proceeds to Step S4. When the abnormal content is the communication board abnormality, the control portion 82 proceeds to Step S5.

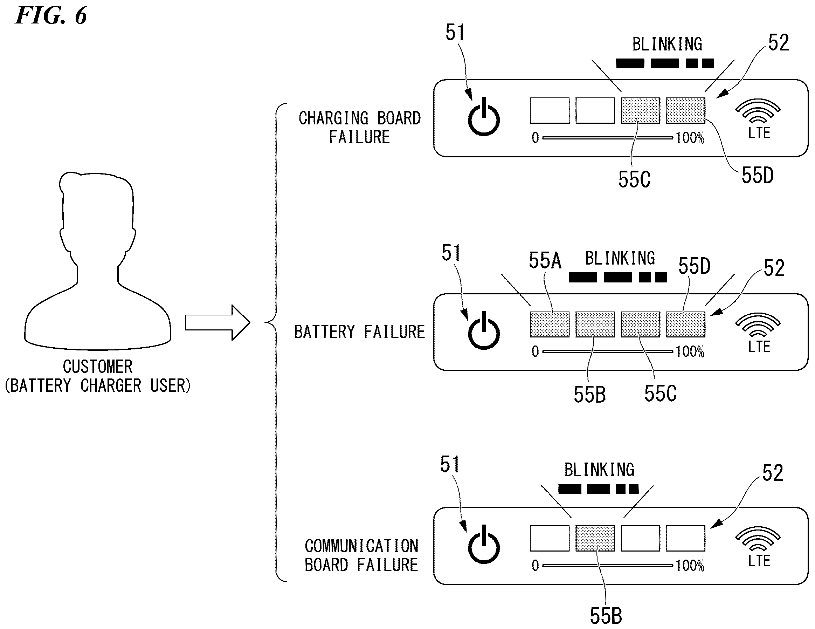

In Step S3, the control portion 82 performs a charging board abnormality display. For example, the control portion 82 lights the electric power source light 51 in a red color and blinks two positions which are the third and fourth segments 55C, 55D in the residual amount light 52 in a green color as the charging board abnormality display (refer to FIG. 6). After Step S3, the routine proceeds to Step S6.

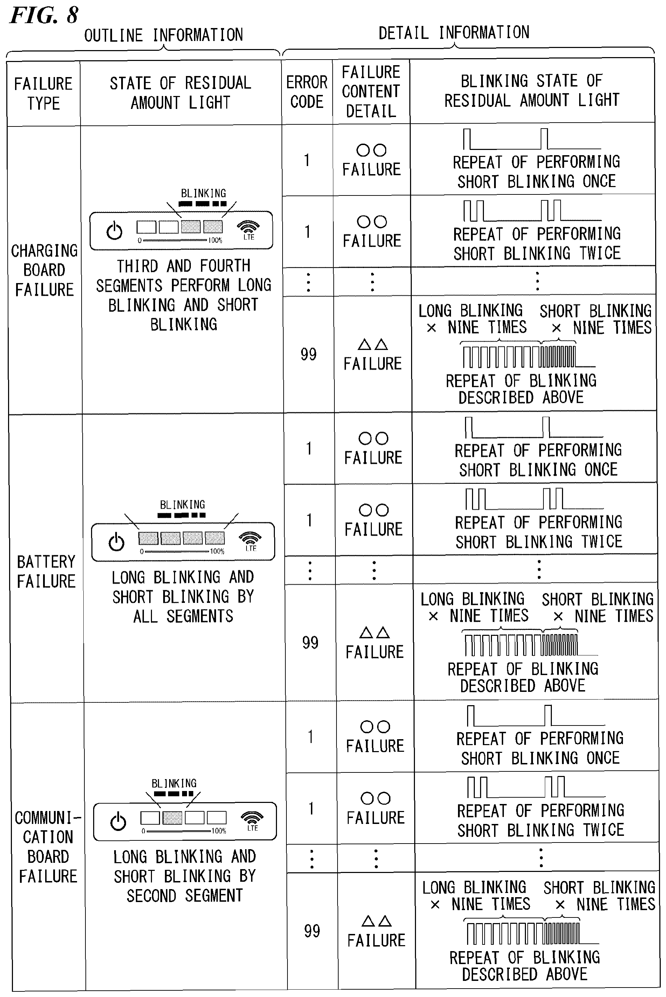

In Step S6, the control portion 82 performs a display of error codes 1 to 99. For example, the control portion 82 causes the tens digit to perform long blinking and causes the ones digit to perform short blinking as the display of the error codes 1 to 99 (refer to FIG. 8). The long blinking means long blinking including long lighting in which the light is turned on for a longer period of time than a threshold value and non-lighting in which the light is turned off for a predetermined period of time. The short blinking means short blinking including short lighting in which the light is turned on for a shorter period of time than a threshold value and non-lighting in which the light is turned off for a predetermined period of time. The duration of one long blinking is longer than the duration of one short blinking.

In Step S4, the control portion 82 performs a battery abnormality display. For example, the control portion 82 lights the electric power source light 51 in a red color and blinks four positions which are the first, second, third, and fourth segments 55A, 55B, 55C, 55D in a green color in the residual amount light 52 as the battery abnormality display (refer to FIG. 6). After Step S4, the routine proceeds to Step S7.

In Step S7, the control portion 82 performs a display of the error codes 1 to 99. For example, the control portion 82 causes the tens digit to perform long blinking and causes the ones digit to perform short blinking as the display of the error codes 1 to 99 (refer to FIG. 8).

In Step S5, the control portion 82 performs a communication board abnormality display. For example, the control portion 82 lights the electric power source light 51 in a red color and blinks one position which is the second segment 55B in a green color in the residual amount light 52 as the communication board abnormality display (refer to FIG. 6). After Step S5, the routine proceeds to Step S8.

In Step S8, the control portion 82 performs a display of the error codes 1 to 99. For example, the control portion 82 causes the tens digit to perform long blinking and causes the ones digit to perform short blinking as the display of the error codes 1 to 99 (refer to FIG. 8).

### <Failure type>

FIG. 6 is a view showing an example of a failure type according to the embodiment.

For example, a customer (for example, a battery charger user or the like) can determine a failure type of (for example, a failed module) by observing a lighting position and a lighting number (for example, a blinking position and a blinking number of the segments 55A to 55D) of the residual amount light 52.

### <Failure detail>

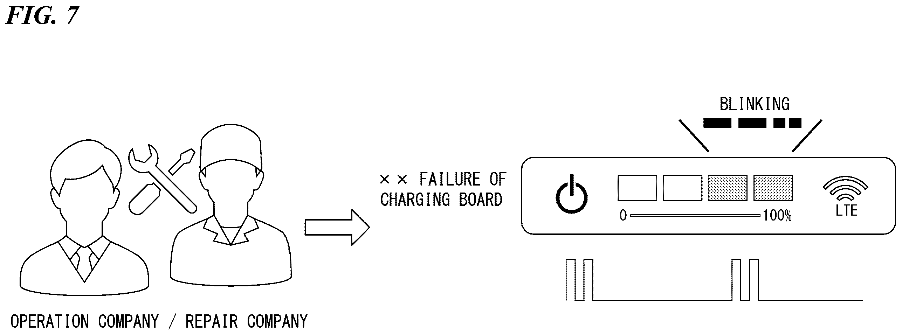

FIG. 7 is a view showing an example of a failure detail according to the embodiment.

For example, a company (for example, an operation company, a repair company, or the like) can determine a failure detail by counting the number of times of blinking (for example, the number of times of long blinking and/or short blinking of the segments 55A to 55D) of long blinking and/or short blinking of the residual amount light 52.

### <Outline information and detail information>

FIG. 8 is a view showing an example of outline information and detail information according to the embodiment.

The outline information includes information relating to a failure type and a state of the residual amount light 52. The detail information includes information relating to an error code, a failure content detail, and a blinking state of the residual amount light 52.

In the present embodiment, the residual amount light 52 used for a residual amount display of the battery is blinked by combining the long blinking and the short blinking, and thereby, the failure information is transmitted.

By changing a "segment position" and a "segment number" of blinking of the residual amount light 52 in accordance with a failure location, the user can instantly identify the failure location.

In an example of the drawing, each of a charging board failure, a battery failure, and a communication board failure can display up to 99 types of error codes by the number of times of blinking of the long blinking and the short blinking. By displaying up to 297 types of error codes by the number of times of blinking of the long blinking and the short blinking, it is possible to understand the details of the failure content without using a dedicated failure diagnostic device.

### <Example of failure occurrence>

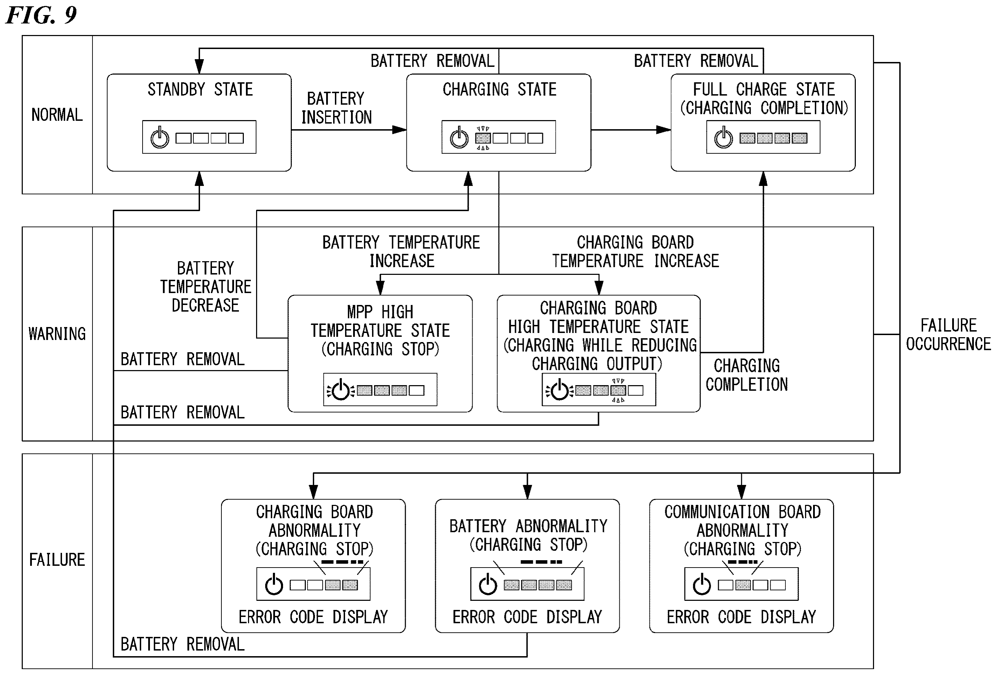

FIG. 9 is a state transition view showing an example of failure occurrence according to the embodiment.

A normal in the drawing shows a process from a standby state to a charging completion.

The standby state means a state before the battery which is the storage device 10 is inserted into the display device 1.

When the battery is inserted into the display device 1, charging of the battery is started. In the example of the drawing, as a charging state, a state is shown in which the electric power source light 51 lights in a green color, and the first segment 55A blinks in a green color in the residual amount light 52.

When a predetermined time elapses from a charging start of the battery, the battery becomes a full charge state (charging completion). In the full charge state, the electric power source light 51 lights in a green color, and all of the segments 55A to 55D lights in a green color in the residual amount light 52.

A warning of the drawing shows the case where the battery or the charging board becomes a high temperature state.

For example, when the temperature of the battery rises in the charging state, the battery becomes a high temperature state. For example, when the battery becomes the high temperature state, the control portion 82 stops charging of the battery. For example, the control portion 82 may start charging of the battery when the temperature of the battery is decreased to a predetermined temperature or less after stopping the charging of the battery.

For example, when the temperature of the charging board rises in the charging state, the charging board becomes a high temperature state. For example, when the charging board becomes the high temperature state, the control portion 82 performs charging while reducing a charging output.

The failure in the drawing shows a charging board abnormality, a battery abnormality, and a communication board abnormality.

For example, when a predetermined condition (for example, Step S2 described above) is satisfied in a normal time or an alarm time, the control portion 82 determines that a failure occurs.

For example, in the case of the charging board abnormality, the control portion 82 blinks two positions which are the third and fourth segments 55C, 55D.

For example, in the case of the battery abnormality, the control portion 82 blinks four positions which are the first to fourth segments 55A, 55B, 55C, 55D.

For example, in the case of the communication board abnormality, the control portion 82 blinks one position which is the second segment 55B.

### <Example of set value of failure display>

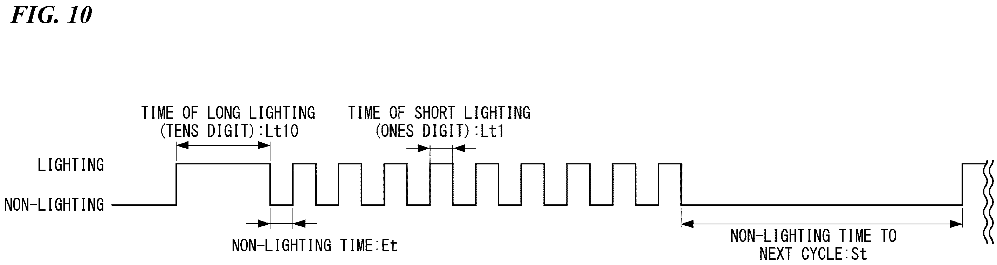

FIG. 10 is a view showing an example of a set value of a failure display according to the embodiment.

The example of the drawing shows the case of an error code 19. In the case of the error code 19, the control portion 82 causes the tens digit to perform long blinking only once and causes the ones digit to perform short blinking nine times. Then, the control portion 82 turns off the light for a predetermined period of time until the next cycle.

A time Lt10 of the long lighting (the tens digit) is longer than a time Lt1 of the short lighting (the ones digit) (Lt10 > Lt1). A non-lighting time Et from the time when the long lighting is performed in the tens digit to the time when the short lighting is performed in the ones digit is shorter than the time Lt10 of the long lighting (the tens digit) (Et < Lt10). For example, the non-lighting time Et may be equal to the time Lt1 of the short lighting (the ones digit) (Et = Lt1).

A non-lighting time St from the final short lighting of the ones digit to the next cycle (until the next long lighting of the tens digit) is longer than the time Lt10 of the long lighting (the tens digit) (St > Lt10). For example, the non-lighting time St may be several times or more of the time Lt10 of the long lighting (the tens digit).

### <Action and effects>

As described above, the display device 1 of the embodiment described above includes: a plurality of light emission portions 51, 52, 53 that are aligned in a row; and a control portion 82 that controls light emission of the plurality of light emission portions 51, 52, 53. The control portion 82 is capable of performing a first control that performs a control based on a number of light emission portions which are lighted among the plurality of light emission portions 51, 52, 53, the number being determined in accordance with a storage amount of a storage target stored in a storage portion 311, a second control that performs a control based on a combination of a number of light emission portions which are blinked among the plurality of light emission portions 51, 52, 53 and a blinking position, the combination being determined in accordance with a portion of an abnormality that occurs in a main device, and a third control that performs a control based on a blinking mode of the plurality of light emission portions 51, 52, 53, the blinking mode being determined in accordance with a mode of the abnormality that occurs in the main device having the storage portion 311.

According to this configuration, the control based on the number of light emission portions which are lighted among the plurality of light emission portions 51, 52, 53, the number being determined in accordance with the storage amount of the storage target stored in the storage portion 311, is performed in the first control, the control based on the combination of the number of light emission portions which are blinked among the plurality of light emission portions 51, 52, 53 and the blinking position, the combination being determined in accordance with the portion of the abnormality that occurs in the main device having the storage portion 311 is performed in the second control, the control based on the blinking mode of the plurality of light emission portions 51, 52, 53, the blinking mode being determined in accordance with the mode of the abnormality that occurs in the main device is performed in the third control, and thereby, it is possible to easily identify an abnormality target (abnormality portion).

Additionally, according to the present configuration, even if the number of light emission portions (lighting portions, segments) is small, it is possible to identify a large number of abnormal contents, abnormality targets, and combinations thereof.

In the embodiment described above, the plurality of light emission portions 51, 52 used in the second control and the plurality of light emission portions 51, 52 used in the third control are the same as each other.

According to this configuration, it is possible to decrease the number of the light emission portions 51, 52 as compared with the case where the plurality of light emission portions 51, 52 used in the second control and the plurality of light emission portions 51, 52 used in the third control are different from each other. Accordingly, it is possible to easily identify an abnormality target (abnormality portion) by a small number of light emission portions 51, 52.

In the embodiment described above, the storage portion 311 is an energy storage portion that stores energy.

According to this configuration, in the configuration in which the storage portion 311 is an energy storage portion that stores energy, it is possible to easily identify an abnormality target (abnormality portion).

In the embodiment described above, the energy storage portion 311 is an electric power storage portion that stores electric power.

According to this configuration, in the configuration in which the energy storage portion 311 is an electric power storage portion that stores electric power, it is possible to easily identify an abnormality target (abnormality portion).

In the embodiment described above, a storage system 300 includes: a storage device 10 having the storage portion 311; and a display device 1 described above.

According to this configuration, by including the display device 1 described above, it is possible to easily identify an abnormality target (abnormality portion).

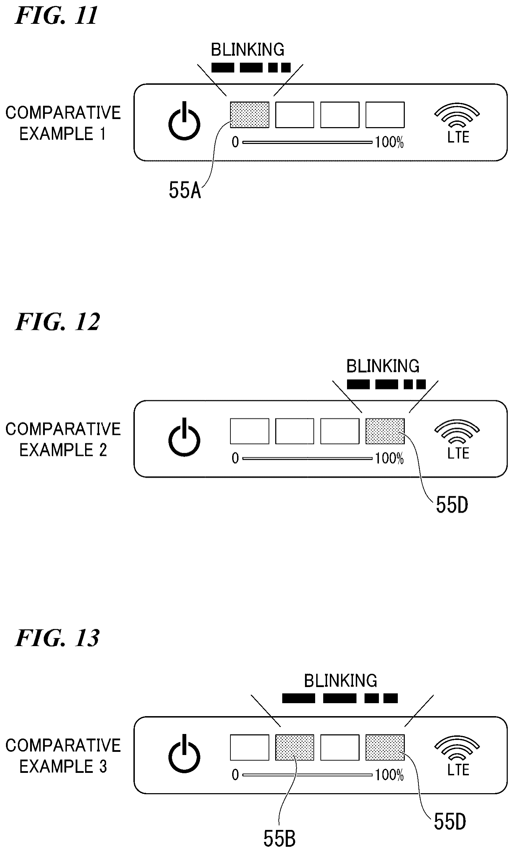

For example, as shown in Comparative Example 1 of FIG. 11, there may be also a mode in which one position which is the first segment 55A is blinked. Further, as shown in Comparative Example 2 of FIG. 12, there may be also a mode in which one position which is the fourth segment 55D is blinked. However, in the case of Comparative Example 1, since the mode is a blinking mode that may occur even in a non-abnormality time (ordinary use time), it is difficult for a user to determine the abnormality. In the case of Comparative Example 2, although the pattern is not a completely identical pattern to that in a non-abnormality time (ordinary use time), it is difficult to find the blinking of one light at an end portion. On the other hand, in the present embodiment, the segments 55A, 55D at left and right ends are not blinked in order to distinguish the display from a residual amount display at the time of charging. For example, in the present embodiment, in the case of the communication board abnormality, one position which is the second segment 55B is blinked. Accordingly, the user can easily determine the communication board abnormality.

For example, as shown in Comparative Example 3 of FIG. 13, there may be also a mode in which when the plurality of segments are blinked, a middle segment is not blinked. In an example of the drawing, an example in which the second and fourth segments 55B, 55D are blinked is shown. However, in the case of Comparative Example 3, visibility is poor, and it is difficult for the user to count the number of times of blinking. On the other hand, in the present embodiment, when the plurality of segments are blinked, the segments are not blinked without blinking a middle segment. For example, in the present embodiment, in the case of the charging board abnormality, two positions (an example of continuous segments) which are the third and fourth segments 55C, 55D are blinked. Accordingly, the user can easily determine the charging board abnormality and easily understand the details of the abnormal content by counting the number of times of blinking.

For example, it is a common ergonomic way of thinking to cause a blinking speed of an event having a high severity to be a higher speed than that of an event having a low severity. However, as a result of intensive studies, in tests of the visibility of several blinking patterns, the inventor of the present application has found that when blinking at different blinking speeds is simultaneously performed, it becomes very difficult to see the blinking. Therefore, in the present embodiment, the electric power source light 51 is blinked at the time of warning, and the electric power source light 51 is lighted at the time of failure (refer to FIG. 9). Accordingly, the user can easily understand the details at the time of failure.

### <Modification example>

The above embodiment is described using an example in which the plurality of light emission portions used in the second control and the plurality of light emission portions used in the third control are the same as each other; however, the embodiment is not limited to this. For example, the plurality of light emission portions used in the second control and the plurality of light emission portions used in the third control may be different from each other. For example, the display device may include a dedicated light emission portion for only displaying a blinking mode indicating a mode of an abnormality. For example, the mode of the light emission portion used in the second control and the third control can be changed in accordance with a design specification.

The above embodiment is described using an example in which the storage portion is an energy storage portion that stores energy; however, the embodiment is not limited to this. For example, the energy storage portion may store an energy source. For example, the energy storage portion may store an energy source that generates energy such as electric power. For example, the energy storage portion may store hydrogen which is a fuel of a fuel cell. For example, a target stored by the storage portion can be changed in accordance with a design specification.

The above embodiment is described using an example in which the energy storage portion is an electric storage portion that stores electric power; however, the embodiment is not limited to this. For example, the energy storage portion may be a hydrogen container that stores hydrogen which is a fuel of a fuel cell. For example, a target stored by the energy storage portion can be changed in accordance with a design specification.

The above embodiment is described using an example in which a plug (second terminal) that is connectable to a receptacle (first terminal) of an electric power storage device is provided on the display device (when functioning as a holding device); however, the embodiment is not limited to this. For example, a receptacle may be provided on the display device, and a plug that is fitted into the receptacle may be provided on the electric power storage device. For example, the configuration form of the first terminal and the second terminal can be changed in accordance with a design specification.

The above embodiment is described using an example in which the display device includes one holding portion that holds a single electric power storage device; however, the embodiment is not limited to this. For example, the display device may have a configuration that includes a plurality of holding portions and is capable of simultaneously holding a plurality of electric power storage devices. For example, a plurality of display devices may be arranged to be aligned in at least one of the leftward-rightward direction and the upward-downward direction and thereby simultaneously hold a plurality of electric power storage devices. For example, the form in which the display device holds the electric power storage device can be changed in accordance with a design specification.

The above embodiment is described using a charging device that supplies electric power to the battery from the outside as an example of the display device; however, the embodiment is not limited to this. For example, the display device may be an electric power supply device that supplies electric power of the battery to the outside. For example, the display device may be an electric power supply device that does not have a charging function. For example, the display device may be applied to a battery attachment portion of an electric power utilization device that utilizes electric power of a battery. For example, the application form of the display device can be changed in accordance with a design specification.

The above embodiment is described using the case where a storage battery (secondary battery) such as a battery as an electric power storage device is attachably and detachably held as an example of the display device; however, the embodiment is not limited to this. For example, the display device may be a device that holds a capacitor as the electric power storage device. For example, the electric power storage device is not limited to a battery and may be another power reserve device such as a capacitor. For example, the electric power storage device to which the present invention is applied can be changed in accordance with a design specification.

A program for realizing all or some of the functions of the display device and the storage system in the present invention may be recorded in a computer-readable recording medium, the program recorded in the recording medium may be read into and executed by a computer system, and thereby, all or some of the processes performed by the display device and the storage system may be performed. It is assumed that the term "computer system" used herein includes an OS or hardware such as peripherals. Further, it is assumed that the term "computer system" also includes a WWW system which includes a homepage-providing environment (or a display environment). Further, the term "computer-readable recording medium" refers to a portable medium such as a flexible disk, a magneto-optical disk, a ROM, and a CD-ROM and a storage device such as a hard disk embedded in the computer system. Further, it is assumed that the term "computer-readable recording medium" also includes a medium which holds a program for a given time such as a volatile memory (RAM) in the computer system which becomes a server or a client when a program is transmitted through a network such as the Internet or a communication line such as a telephone line.

Further, the program described above may be transmitted from the computer system which stores this program in the storage device or the like, to another computer system via a transmission medium or by transmission waves in the transmission medium. Here, the term "transmission medium" which transmits the program refers to a medium having a function of transmitting information such as a network (communication network) such as the Internet or a communication line such as a telephone line. Further, the program described above may be a program for realizing some of the above-described functions. Further, the program may be a so-called differential file (differential program) which can realize the above-described functions by a combination with a program already recorded in the computer system.

Although embodiments of the present invention have been described, the present invention is not limited to such embodiments, and various modifications and substitutions can be made without departing from the scope of the present invention.

### DESCRIPTION OF THE REFERENCE SYMBOLS

- 1: Display device (main device)
- 10: Storage device
- 50: Display part
- 51: Electric power source light (light emission portion)
- 52: Residual amount light (light emission portion)
- 53: Communication light (light emission portion)
- 82: Control portion
- 86: Memory section (memory device)
- 300: Storage system
- 311: Storage portion

## Claims

1. A display device comprising: a plurality of light emission portions that are aligned in a row; and a control portion that controls light emission of the plurality of light emission portions,
wherein the control portion is capable of performing
a first control that performs a control based on a number of light emission portions which are lighted among the plurality of light emission portions, the number being determined in accordance with a storage amount of a storage target stored in a storage portion,
a second control that performs a control based on a combination of a number of light emission portions which are blinked among the plurality of light emission portions and a blinking position, the combination being determined in accordance with a portion of an abnormality that occurs in a main device having the storage portion, and
a third control that performs a control based on a blinking mode of the plurality of light emission portions, the blinking mode being determined in accordance with a mode of the abnormality that occurs in the main device.

2. The display device according to claim 1,
wherein the plurality of light emission portions used in the second control and the plurality of light emission portions used in the third control are the same as each other.

3. The display device according to claim 1 or 2,
wherein the storage portion is an energy storage portion that stores energy or an energy source.

4. The display device according to claim 3,
wherein the energy storage portion is an electric power storage portion that stores electric power.

5. A storage system comprising:
a storage device having the storage portion; and
a display device according to any one of claims 1 to 4.

6. A display method of a display device comprising: a plurality of light emission portions that are aligned in a row; and a control portion that controls light emission of the plurality of light emission portions,
wherein the display method includes:
a first step of performing a control based on a number of light emission portions which are lighted among the plurality of light emission portions, the number being determined in accordance with a storage amount of a storage target stored in a storage portion;
a second step of performing a control based on a combination of a number of light emission portions which are blinked among the plurality of light emission portions and a blinking position, the combination being determined in accordance with a portion of an abnormality that occurs in a main device having the storage portion; and
a third step of performing a control based on a blinking mode of the plurality of light emission portions, the blinking mode being determined in accordance with a mode of the abnormality that occurs in the main device.

7. A program that causes a computer comprising: a plurality of light emission portions that are aligned in a row; and a control portion that controls light emission of the plurality of light emission portions to execute:
a first step in which the control portion performs a control based on a number of light emission portions which are lighted among the plurality of light emission portions, the number being determined in accordance with a storage amount of a storage target stored in a storage portion;
a second step in which the control portion performs a control based on a combination of a number of light emission portions which are blinked among the plurality of light emission portions and a blinking position, the combination being determined in accordance with a portion of an abnormality that occurs in a main device having the storage portion; and
a third step in which the control portion performs a control based on a blinking mode of the plurality of light emission portions, the blinking mode being determined in accordance with a mode of the abnormality that occurs in the main device.

8. A computer-readable storage device that stores a program according to claim 7.
